# EUROPEAN PATENT SPECIFICATION

(11) **EP 0 508 813 B1**
(45) Date of publication and mention of the grant of the patent: **17.01.1996**
(21) Application number: 92303229.6
(22) Date of filing: 10.04.1992
(51) Int. Cl.: B60C 11/00

(54) **Off-road tyre**
Geländeluftreifen
Bandage pneumatique tout-terrain

(30) Priority: 12.04.1991 JP 108385/91
(43) Date of publication of application: 14.10.1992
(73) Proprietor: SUMITOMO RUBBER INDUSTRIES LIMITED, Kobe-shi Hyogo-ken (JP)
(72) Inventor: Igarashi, Yasuo, Kawanishi-shi, Hyogo-ken (JP)
(74) Representative: Stewart, Charles Geoffrey

(56) References cited:
- EP-A- 0 359 734
- US-A- 4 617 976
- US-A- 4 955 417
- PATENT ABSTRACTS OF JAPAN vol. 9, no. 297 (M-432)(2020) 25 November 1985 & JP-A-60 135 310 (SUMITOMO GOMU KOGYO K.K.) 18 July 1985

## Description

The present invention relates to a pneumatic tyre for off-the-road use, and more particularly to a tyre in which ride comfort, vibration damping, road grip, and steering stability are improved in a balanced manner.

In general, off-road tyres are inflated to a low internal pressure, for example 0.1 to 0.5 kg/sq.cm, when running off-the-road to increase the ground contacting area and also to absorb shocks.

However, due to such a low internal pressure and the resultant decreased tyre lateral stiffness, steering stability, vibration damping, ride comfort are liable to deterioration.

Heretofore, the performance of such tyres has been improved mainly by employing either a cross ply carcass with adjustment of the bias angles of the carcass cords, or a single ply radial carcass without a belt or by using a cordless carcass.

A beltless cross-ply tyre wherein the rubber thickness of the main body increases gradually from the tyre equator to the shoulder and then decreases gradually to the point on the sidewall of the maximum tyre width is known, for example, from US-A-4955417.

The properties of such prior art tyres were evaluated by a skilled test driver and are shown in Table 1 ranked from 1 to 5 in ascending order of improving performance.

As shown in Table 1, in a cross ply tyre, ride comfort and damping decrease if the carcass cord angles to the radial plane are small, whilst if the carcass cord angles are large, road grip and steering stability are liable to deteriorate.

Further, in a cordless-carcass tyre, although ride comfort is excellent, the other properties of the tyre are inferior.

Furthermore, in a beltless tyre with a single-radial-ply carcass, damping and steering stability are impaired.

Thus, it is very difficult to satisfy all the requirements for an off-the-road tyre.

It is therefore, an object of the present invention to provide an off-the-road tyre in which various tyre properties are improved in a well-balanced manner.

According to the present invention an off-the-road tyre comprises a tyre main body and tread blocks disposed around said tyre main body to provide a block pattern, said tyre main body comprising a pair of bead cores disposed one in each of bead portions, a carcass extending between the bead portions and having two crossed plies turned up around the bead cores, a belt disposed radially outside the carcass and having two crossed plies (B1,B0) of parallel cords laid at an angle from 20 to 50 degrees to the tyre equator, a rubber layer disposed outside the carcass and belt to define a tread portion and sidewall portions, the rubber thickness of the tyre main body being increased gradually from the tyre equator (CO) to the tyre shoulder portions and then gradually decreases to the maximum carcass cross sectional width points (F1) in the sidewall portions, wherein the said rubber thickness is defined as being measured from the outer profile (G) of the tyre main body to the outer profile of the carcass, characterised by said rubber thickness having a distribution satisfying the following conditions:
the quotient (TB/TA) of the thickness (TB) at a point (B) divided by the thickness (TA) at said point (A) is in the range from 1.25 to 1.65;
the quotient (TC/TB) of the thickness (TC) at said point (C) divided by the thickness (TB) at said points (B) is in the range from 1.2 to 2.0;
the rubber thickness is gradually increased from the point (A) to the point (C);
the quotient (TD/TC) of the thickness (TD) at a point (D) divided by said thickness (TC) is in the range from 1.0 to 1.2;
the quotient (TE/TC) of the thickness (TE) at a point (E) divided by said thickness (TC) is in the range from 1.0 to 1.5;
the quotient (TF/TE) of the thickness (TF) at a point (F) divided by said thickness (TE) is not less than 0.5 and less than 1.0; and
the rubber thickness is gradually increased from the point (F) to the point (E); wherein said points (A, B, C, D, E and F) are on the profile (G) of the tyre main body;
the point (A) is positioned at the tyre equator (CO);
the point (F) is at the same radial height as the maximum width point (F') of the carcass;
the point (E) is at the same axial distance as the maximum width point (F') of the carcass, from the tyre equator (CO);
the point (D) is at 90% of said axial distance of the maximum width point (F') of the carcass, from the tyre equator (CO);
the point (C) is at the same axial distance (S) as the axial edges (C1) of the ground contacting area of the tread, from the tyre equator (CO), measured under a condition that the tyre is mounted on its scheduled rim and inflated to its scheduled pressure and loaded with its maximum tyre load; and
the point (B) is at 50% of said axial distance (S), from the tyre equator (CO).

An embodiment of the present invention will now be described in detail in conjunction with the accompanying drawings, in which:
Fig.1 is a cross sectional view of an off-the-road tyre according to the present invention; and

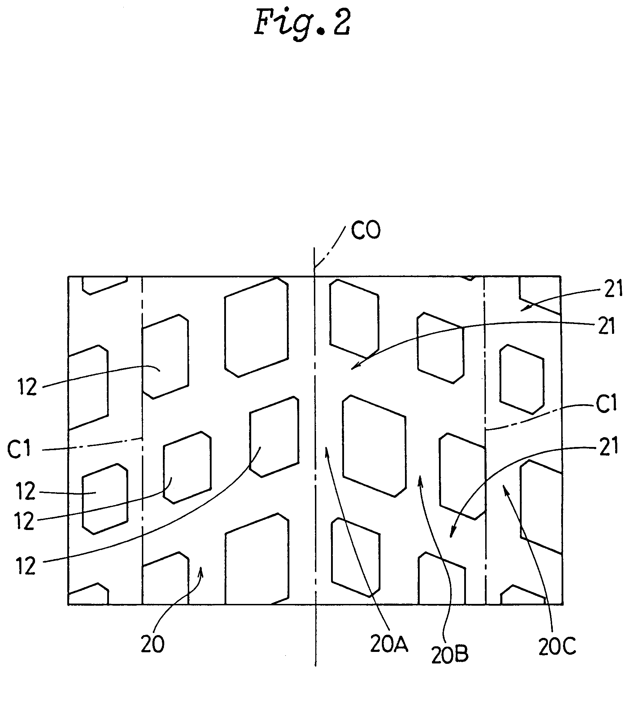

Fig.2 is a partial plan view of the tyre showing the tread pattern thereof.

In the figures, a tyre of the invention is a bias ply tyre comprising a tread portion 5, a pair of axially spaced bead portions 3, and a pair of sidewall portions 4 extending from the bead portions 3 to the tread edges.

The tyre is formed by providing tread blocks 12 around a tyre main body 1.

The tyre main body 1 comprises a bead core 2 disposed in each of the bead portions 3, a carcass 6 extending between the bead portions 3, a belt 9 disposed on the radially outside of the carcass 6 in the tread portion 5, and a rubber layer disposed on the outsides of the carcass 6 and belt 9 so as to extend at least in to the tread portion 5 and sidewall portions 4.

The carcass 6 has a bias ply structure comprising a plurality of plies 7 (two crossed plies) of cords extending between the bead portions and turned up around the bead cores 2 from the axially inside to the outside thereof to form carcass turned up portions.

The turned up portions are terminated near the carcass maximum width point F′ at which the cross sectional width of the carcass 6 is maximum when the tyre is mounted on its scheduled rim or officially approved rim for the tyre and inflated to its scheduled pressure and unloaded.

For the carcass cords, steel fibre cords or organic fibre cords, e.g. nylon, polyester of the like are used.

The cords in each of the carcass plies 7 are arranged at a bias angle in the range from 25 to 45 degrees with respect to a radial plane including the tyre axis.

If the angle is less than 25 degrees, ride comfort and vibration damping deteriorate. If the cord angle is more than 45 degrees, steering stability decreases.

Each of the bead portions 3 is provided with a bead apex 8. The bead apex 8 is disposed between the carcass main portion and each of the turned up portions, and extends radially outwardly from the bead core 2.

The belt 9 is composed of a radially inner belt ply BI disposed on the outer surface of the carcass 6 and a radially outer belt ply BO disposed thereon, each of which is made of high modulus organic fibre cords or steel fibre cords laid parallel to each other at an angle from 20 to 50 degrees with respect to the tyre equator CO.

The belt cords in one of the plies cross the belt cords in the other ply, thereby forming a stiff triangular truss structure in combination with the carcass cords.

If the belt cord angle is less than 20 degrees, ride comfort deteriorate. If the belt cord angle is more than 50 degrees, road grip and steering stability deteriorate.

On the outside of the assembly of the carcass, belt and the like, a rubber layer extending from one of the bead portions to the other bead portion is disposed to form the tyre main body 1.

Further, the tyre main body 1 is provided with a plurality of blocks 12 as mentioned above.

Thus the tread portion 5 of the tyre 1 is providéd with a block pattern which comprises the above-mentioned blocks 12 divided by a plurality of circumferential grooves 20 and a plurality of axial grooves 21.

In this embodiment, five continuous circumferential grooves are provided; one central circumferential groove 20A at the tyre equator CO, two middle circumferential grooves 20B one on each side of the central groove 20A, and two shoulder circumferential grooves 20C in the tread shoulder regions.

The axial grooves 21 extend across the whole width of the tread portion and the axial ends thereof are opened at the tread edges towards the respective sidewall portions.

The block tread pattern has a sea/land ratio of more than 1. That is, the total grooved area is larger than the total block top area.

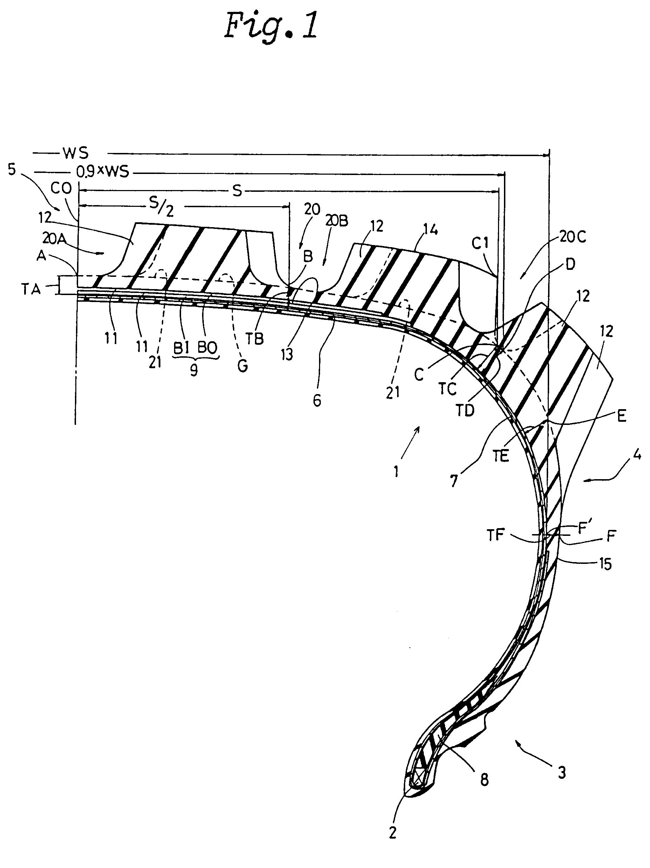

The tyre main body 1 has a profile G formed by a smoothly curved line devoid of any inflection point. In Fig.1, the profile G is shown by a broken line extending from the tyre equator to an upper sidewall point and then a solid line extending to the bead portion.

In practice the profile G is known from the groove base line.
In this invention, the thickness of rubber of the tyre main body 1, which is defined as measured from the profile G or outer face of the tyre main body 1 to the profile 13 or outer face of the carcass 6, has a specific distribution.

The thickness is gradually increased form the tyre equator CO to the tyre shoulder portions and then gradually decreased to the maximum carcass cross sectional width points.

At points A, B, C, D, E and F on the profile G, the respective thicknesses TA, TB, TC, TD, TE and TF are specifically defined as follows.

Here, the point A is positioned at the tyre equator CO; the point F is at the same radial height as the maximum width point F′ of the carcass 6; the point E is at the same axial distance from the tyre equator CO as the maximum width point F′ of the carcass 6, the point D is at 90% of the above-mentioned axial distance of the maximum width point F′ of the carcass 6, from the tyre equator CO; the point C is at the same axial distance S from the tyre equator CO as the axial edges C1 of the ground contacting area of the tread, measured under the conditions that the tyre is mounted on its scheduled rim and inflated to its scheduled pressure and loaded with its maximum tyre load; and the point B is at 50% of the above-mentioned axial distance S from the tyre equator CO.

In the tread portion, the thickness is gradually increased from the equator point A to the edge point C through the middle point B.

The quotient TB/TA of the thickness TB at the middle point B divided by the thickness TA at the equator point A is in the range from 1.25 to 1.65.

The quotient TC/TB of the thickness TC at the edge point C divided by the thickness TB at the middle points B is in the range from 1.2 to 2.0.

If the thickness is increased abruptly beyond the above-mentioned ranges, steering stability is decreased. If the thickness is decreased gradually from the point A to the point C then to the contrary, ride comfort deteriorates.

Further, the quotient TD/TC of the thickness TD at the 90% width point D divided by the thickness TC at the edge point C is in the range from 1.0 to 1.2.

The quotient TE/TC of the thickness TE at the 100% width point E divided by the thickness TC at the edge point C is in the range from 1.0 to 1.5.

Thereby, the rigidity of the tread shoulder portion is optimised to improve the tyre performance.

Furthermore, the quotient TF/TE of the thickness TF at the maximum carcass width point F divided by the thickness TE at the 100% width point TE is not less than 0.5 and less than 1.0. Thereby, ride comfort and vibration damping are maintained or improved whilst a weight reduction in the tyre can be achieved.

Test tyres of size 110/90-18 were prepared and tested. The specifications of these and test results are given in Table 2.

In the tests, each tyre was mounted on its scheduled rim and inflated to its scheduled pressure of 2.25 kgf/sq.cm, Ride comfort, vibration damping, road grip and steering stability were evaluated into five ranks by a skilled test driver. Durability was evaluated from the distance the tyre ran before suffering damage.

In the five tests rankings of 4 and 5 are acceptable.

The durability is indicated by an index based on the reference tyre 1 being 100. The larger the valise, then the better the durability.

From the test results, the working example tyres EX1-EX4 according to the present invention were found to be superior to the reference tyres REF1-REF3 because the ride comfort, vibration damping, road grip, steering stability, and durability were improved in a well-balanced manner.

**TABLE 1**

| Tire | A | B | C | D |
|---|---|---|---|---|
| Carcass | two cross plies with large cord angle | two cross plies with small cord angle | cordless one | radial ply beltless |
| Ride comfort | 4 | 2 | 5 | 5 |
| Vibration damping | 4 | 3 | 3 | 3 |
| Road grip | 4 | 5 | 3 | 4 |
| Steering stability | 3 | 5 | 2 | 2 |

**TABLE 2**

| Tire | Ex.1 | Ex.2 | Ex.3 | Ex.4 | Ref.1 | Ref.2 | Ref.3 |
|---|---|---|---|---|---|---|---|
| Carcass | | | | | | | |
| Structure | Bias | Bias | Bias | Bias | Bias | Bias | Radial |
| Ply No. | 2 | 2 | 2 | 2 | 2 | 2 | 1 |
| Cord | 2/1260d | 2/1260d | 2/1260d | 2/1260d | 2/1260d | 2/1260d | 2/1260d |
| Count | 39 | 39 | 39 | 39 | 39 | 39 | 39 |
| Cord angle (deg.) | 25 | 45 | 35 | 35 | 50 | 20 | 90 |

| Belt | | | | | | | |
|---|---|---|---|---|---|---|---|
| Cord | 2/1260d | 2/1260d | 2/1260d | 2/1260d | 2/1260d | 2/1260d | 2/1260d |
| Count | 39 | 39 | 39 | 39 | 39 | 39 | 39 |
| Ply No. | 2 | 2 | 2 | 2 | 2 | 2 | 2 |
| Cord angle (deg.) | 50 | 20 | 30 | 50 | 55 | 15 | 15 |

| Bead apex | | | | | | | |
|---|---|---|---|---|---|---|---|
| Height (mm) | 40 | 40 | 40 | 40 | 40 | 40 | 40 |

| Rubber thickness | | | | | | | |
|---|---|---|---|---|---|---|---|
| TB/TA | 1.25 | 1.65 | 1.5 | 1.3 | 1.2 | 1.7 | 1.0 |
| TC/TB | 1.2 | 2.0 | 1.8 | 1.5 | 1.0 | 2.2 | 1.16 |
| TD/TC | 1.0 | 1.2 | 1.2 | 1.2 | 0.8 | 1.3 | 1.56 |
| TE/TC | 1.0 | 1.5 | 1.3 | 1.2 | 0.8 | 1.8 | 0.75 |
| TF/TE | 0.5 | 1.0 | 1.0 | 0.8 | 0.3 | 1.2 | 1.0 |

| Test result | | | | | | | |
|---|---|---|---|---|---|---|---|
| Ride comfort | 4 | 4 | 4 | 4 | 3 | 2 | 5 |
| Damping | 4 | 4 | 4 | 4 | 3 | 3 | 3 |
| Road grip | 4 | 4 | 4 | 4 | 3 | 4 | 4 |
| Steering stability | 4 | 4 | 4 | 4 | 3 | 4 | 2 |
| Durability | 118 | 118 | 118 | 118 | 100 | 106 | 94 |

## Claims

1. A belted cross ply tyre for off-the-road use comprising a tyre main body (1) and tread blocks (12) disposed around said tyre main body (1) to provide a block pattern, said tyre main body (1) comprising a pair of bead cores (2) disposed one in each of bead portions (3), a carcass (6) extending between the bead portions (3) and having two crossed plies turned up around the bead cores 2, a belt (9) disposed radially outside the carcass (6) and having two crossed plies (B1,B0) of parallel cords laid at an angle from 20 to 50 degrees to the tyre equator, a rubber layer disposed outside the carcass (6) and belt (9) to define a tread portion (5) and sidewall portions 4, the rubber thickness of the tyre main body (1) being increased gradually from the tyre equator (CO) to the tyre shoulder portions and then gradually decreases to the maximum carcass cross sectional width points (F) in the sidewall portions (4), wherein the said rubber thickness is defined as being measured from the outer profile (G) of the tyre main body (1) to the outer profile (13) of the carcass (6), characterised by said rubber thickness having a distribution satisfying the following conditions:
the quotient (TB/TA) of the thickness (TB) at a point (B) divided by the thickness (TA) at a point (A) is in the range from 1.25 to 1.65;
the quotient (TC/TB) of the thickness (TC) at a point (C) divided by the thickness (TB) at the point (B) is in the range from 1.2 to 2.0;
the rubber thickness is gradually increased from the point (A) to the point (C);
the quotient (TD/TC) of the thickness (TD) at a point (D) divided by said thickness (TC) is in the range from 1.0 to 1.2;
the quotient (TE/TC) of the thickness (TE) at a point (E) divided by said thickness (TC) is in the range from 1.0 to 1.5;
the quotient (TF/TE) of the thickness (TF) at a point (F) divided by said thickness (TE) is not less than 0.5 and less than 1.0; and
the rubber thickness is gradually increased from the point (F) to the point (E); wherein said points (A, B, C, D, E and F) are on the profile (G) of the tyre main body;
the point (A) is positioned at the tyre equator (CO);
the point (F) is at the same radial height as the maximum width point (F') of the carcass;
the point (E) is at the same axial distance as the maximum width point (F') of the carcass, from the tyre equator (CO);
the point (D) is at 90% of said axial distance of the maximum width point (F') of the carcass, from the tyre equator (CO);
the point (C) is at the same axial distance (S) as the axial edges (C1) of the ground contacting area of the tread, from the tyre equator (CO), measured under the condition that the tyre is mounted on its scheduled rim and inflated to its scheduled pressure and loaded with its maximum tyre load; and
the point (B) is at 50% of said axial distance (S), from the tyre equator (CO).

2. A belted cross ply tyre according to claim 1, characterised in that the tread portion (5) is provided with a plurality of circumferentially extending grooves (20A,20B,20C) and a plurality of axially extending grooves (21) defining said blocks (12), and said axially extending grooves (21) extend across the whole width of the tread (5) and the axially outermost ends are opened at the tyre sidewalls (15).

3. A belted cross ply tyre according to claim 1, characterised in that said block pattern has a sea/land ratio of more than 1.

## Patentansprüche

1. Ein mit Gürtel versehener Diagonalreifen zur Verwendung im Gelände mit einem Reifenhauptkörper (1) und Laufflächenblöcken (12), die um den Reifenhauptkörper (1) herum angeordnet sind, um ein Blockprofilmuster vorzusehen, wobei der Reifenhauptkörper (1) umfaßt ein Paar Wulstkerne (2), von denen einer in jedem von Wulstteilen (3) angeordnet ist, eine Karkasse (6), die sich zwischen den Wulstteilen (3) erstreckt und zwei gekreuzte Lagen aufweist, die um die Wulstkerne 2 umgeschlagen sind, einen Gürtel (9), der radial außerhalb der Karkasse (6) angeordnet ist und zwei gekreuzte Lagen (B1, B0) paralleler Corde aufweist, die unter einem Winkel von 20 bis 50 Grad zum Reifenäquator gelegt sind, eine Gummischicht, die außerhalb der Karkasse (6) und des Gürtels (9) angeordnet ist, um einen Laufflächenteil (5) zu definieren, und Seitenwandteile 4, wobei die Gummidicke des Reifenhauptkörpers (1) allmählich vom Reifenäquator (CO) zu den Reifenschulterteilen zunimmt und dann allmählich zu den Punkten (F) maximaler Karkassenquerschnittsbreite in den Seitenwandteilen (4) abnimmt und die Gummidicke als das Maß vom äußeren Profil (G) des Reifenhauptkörpers (1) zum äußeren Profil (13) der Karkasse (6) definiert ist,
dadurch **gekennzeichnet,** daß die Gummidicke eine Verteilung aufweist, die die folgenden Bedingungen erfüllt:
der Quotient (TB/TA) der Dicke (TB) an einem Punkt (B) dividiert durch die Dicke (TA) an einem Punkt (A) liegt im Bereich von 1,25 bis 1,65;
der Quotient (TC/TB) der Dicke (TC) an einem Punkt (C) dividiert durch die Dicke (TB) am Punkt (B) liegt im Bereich von 1,2 bis 2,0;
die Gummidicke nimmt allmählich vom Punkt (A) zum Punkt (C) zu;
der Quotient (TD/TC) der Dicke (TD) an einem Punkt (D) dividiert durch die Dicke (TC) liegt im Bereich von 1,0 bis 1,2;
der Quotient (TE/TC) der Dicke (TE) an einem Punkt (E) dividiert durch die Dicke (TC) liegt im Bereich von 1,0 bis 1,5;
der Quotient (TF/TE) der Dicke (TF) an einem Punkt (F) dividiert durch die Dicke (TE) ist nicht kleiner als 0,5 und kleiner als 1,0; und
die Gummidicke nimmt allmählich vom Punkt (F) zum Punkt (E) zu; wobei die Punkte (A, B, C, D, E und F) auf dem Profil (G) des Reifenhauptkörpers liegen;
der Punkt (A) am Reifenäquator (CO) Positioniert ist;
der Punkt (F) auf der gleichen radialen Höhe wie der Punkt maximaler Breite (F') der Karkasse liegt;
der Punkt (E) im gleichen axialen Abstand wie der Punkt maximaler Breite (F') der Karkasse vom Reifenäquator (CO) liegt;
der Punkt (D) bei 90% des axialen Abstandes vom Punkt maximaler Breite (F') der Karkasse vom Reifenäquator (CO) liegt;
der Punkt (C) im gleichen axialen Abstand (S) wie die axialen Kanten (C1) der Bodenkontaktfläche der Lauffläche vom Reifenäquator (CO) liegt,
gemessen unter der Bedingung, daß der Reifen auf seiner festgelegten Felge aufgezogen und auf seinen festgelegten Druck aufgepumpt und mit seiner maximalen Reifenbelastung belastet ist; und
der Punkt (B) bei 50% des axialen Abstandes (S) vom Reifenäquator (CO) liegt.

2. Ein mit Gürtel versehener Diagonalreifen nach Anspruch 1,
dadurch **gekennzeichnet,**
daß der Laufflächenteil (5) mit einer Vielzahl von sich in Umfangsrichtung erstreckenden Nuten (20A, 20B, 20C) und einer Vielzahl von sich axial erstreckenden Nuten (21) versehen ist, die die Blöcke (12) definieren, und daß sich die axial erstreckenden Nuten (21) über die gesamte Breite der Lauffläche (5) erstrecken und die axial äußersten Enden sich an den Reifenseitenwänden (15) öffnen.

3. Ein mit Gürtel versehener Diagonalreifen nach Anspruch 1,
dadurch **gekennzeichnet,**
daß das Blockprofilmuster ein See/Land-Verhältnis von mehr als 1 aufweist.

## Revendications

1. Pneumatique diagonal à ceinture destiné à être utilisé en tous terrains, comprenant un corps principal (1) de pneumatique et des blocs (12) de bande de roulement disposés autour du corps principal (1) du pneumatique pour la formation d'une sculpture à blocs, le corps principal (1) du pneumatique comprenant deux tringles (2) placées chacune dans une partie de talon (3), une carcasse (6) placée entre les parties de talon (3) et ayant deux nappes croisées repliées autour des tringles (2), une ceinture (9) disposée radialement à l'extérieur de la carcasse (6) et ayant deux nappes croisées (B1, B0) de câblés parallèles faisant un angle compris entre 20 et 50° avec l'équateur du pneumatique, une couche de caoutchouc placée à l'extérieur de la carcasse (6) et de la ceinture (9) afin qu'elle forme une partie de bande de roulement (5) et des parties de flanc (4), l'épaisseur du caoutchouc du corps principal (1) du pneumatique augmentant progressivement de l'équateur (CO) du pneumatique vers les parties d'épaulement du pneumatique puis diminuant progressivement vers les points (F) de largeur maximale en coupe de la carcasse dans les parties de flanc (4), dans lequel l'épaisseur du caoutchouc est définie par mesure a partir du profil externe (G) du corps principal (1) du pneumatique vers le profil externe (13) de la carcasse (6), caractérisé en ce que l'épaisseur du caoutchouc a une distribution qui remplit les conditions suivantes :
le quotient (TB/TA) de l'épaisseur (TB) en un point (B) et de l'épaisseur (TA) en un point (A) est compris entre 1,25 et 1,65,
le quotient (TC/TB) de l'épaisseur (TC) en un point (C) et de l'épaisseur (TB) au point (B) est compris entre 1,2 et 2,0,
l'épaisseur du caoutchouc augmente progressivement du point (A) vers le point (C),
le quotient (TD/TC) de l'épaisseur (TD) au point (D) et de l'épaisseur (TC) est compris entre 1,0 et 1,2,
le quotient (TE/TC) de l'épaisseur (TE) au point (E) et de l'épaisseur (TC) est compris entre 1,0 et 1,5,
le quotient (TF/TE) de l'épaisseur (TF) en un point (F) et de l'épaisseur (TE) n'est pas inférieur à 0,5 et est inférieur à 1,0, et
l'épaisseur du caoutchouc augmente progressivement du point (F) vers le point (E), dans lequel les points (A, B, C, D, E et F) se trouvent sur le profil (G) du corps principal du pneumatique,
le point (A) se trouve sur l'équateur (CO) du pneumatique,
le point (F) se trouve à la même hauteur radiale que le point (F') de largeur maximale de la carcasse,
le point (E) se trouve à la même distance axiale que le point de largeur maximale (F') de la carcasse par rapport à l'équateur (CO) du pneumatique,
le point (D) se trouve à 90 % de la distance axiale du point de largeur maximale (F') de la carcasse, par rapport à l'équateur du pneumatique (CO),
le point (C) est à la même distance axiale (S) que les bords axiaux (C1) de la surface de contact avec le sol de la bande de roulement par rapport à l'équateur du pneumatique (CO), mesurés dans des conditions telles que le pneumatique est monté sur la jante prévue et est gonflé à la pression prévue et est soumis à sa charge maximale, et
le point (B) se trouve à 50 % de la distance axiale (S) par rapport à l'équateur du pneumatique (CO).

2. Pneumatique diagonal ayant une ceinture selon la revendication 1, caractérisé en ce que la partie de bande de roulement (5) a plusieurs gorges disposées circonférentiellement (20A, 20B, 20C) et plusieurs gorges disposées axialement (21) délimitant les blocs (12), et les gorges disposées axialement (21) sont disposées sur toute la largeur de la bande de roulement (5) et les extrémités axialement externes debouchent au niveau des flancs (15) du pneumatique.

3. Pneumatique diagonal ayant une ceinture selon la revendication 1, caractérisé en ce que la sculpture des blocs présente un rapport des évidements et des surfaces d'appui qui est supérieur à 1.
